(19) Europäisches Patentamt
European Patent Office
Office européen des brevets

(11) **EP 3 072 005 B1**

(12) **EUROPÄISCHE PATENTSCHRIFT**

(45) Veröffentlichungstag und Bekanntmachung des Hinweises auf die Patenterteilung:
**26.03.2025 Patentblatt 2025/13**

(21) Anmeldenummer: **14802064.7**

(22) Anmeldetag: **21.11.2014**

(51) Internationale Patentklassifikation (IPC):
**G02B 27/01** (2006.01)    **G02C 7/08** (2006.01)
**G02B 6/00** (2006.01)

(52) Gemeinsame Patentklassifikation (CPC):
**G02B 27/0172; G02C 7/086;** G02B 6/00;
G02B 2027/0125; G02B 2027/015; G02B 2027/0178

(86) Internationale Anmeldenummer:
**PCT/EP2014/075334**

(87) Internationale Veröffentlichungsnummer:
**WO 2015/075207 (28.05.2015 Gazette 2015/21)**

(54) **ABBILDUNGSOPTIK SOWIE ANZEIGEVORRICHTUNG MIT EINER SOLCHEN ABBILDUNGSOPTIK**

IMAGING OPTICAL UNIT AND DISPLAY DEVICE HAVING SUCH AN IMAGING OPTICAL UNIT

OPTIQUE D'IMAGERIE ET DISPOSITIF D'AFFICHAGE PRÉSENTANT UNE TELLE OPTIQUE D'IMAGERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.11.2013 DE 102013223964**

(43) Veröffentlichungstag der Anmeldung:
**28.09.2016 Patentblatt 2016/39**

(73) Patentinhaber: **tooz technologies GmbH**
**73430 Aalen (DE)**

(72) Erfinder:
• **DOBSCHAL, Hans-Jürgen**
**99518 Bad Sulza (DE)**
• **LINDIG, Karsten**
**99084 Erfurt (DE)**

• **RUDOLPH, Günter**
**07743 Jena (DE)**
• **RIEDEL, Lisa**
**07749 Jena (DE)**

(74) Vertreter: **Patentanwälte Geyer, Fehners & Partner mbB**
**Perhamerstrasse 31**
**80687 München (DE)**

(56) Entgegenhaltungen:
**EP-A1- 2 187 188          EP-A1- 2 187 188**
**WO-A1-2013/173732     WO-A2-01/95027**
**WO-A2-2007/062098     DE-A1- 102009 010 537**
**DE-A1- 102009 010 537  US-A1- 2008 043 347**
**US-A1- 2008 043 347**

## Beschreibung

Die vorliegende Erfindung betrifft eine Abbildungsoptik mit den Merkmalen des Oberbegriffes des Anspruches 1 sowie eine Anzeigevorrichtung mit einer solchen Abbildungsoptik.

Bei solchen Anzeigevorrichtungen ist eine auf den Kopf eines Benutzers aufsetzbare Haltevorrichtung häufig brillenartig ausgebildet. Wenn z.B. das Bilderzeugungsmodul der Anzeigevorrichtung einen Bildgeber mit einer Fläche von 3,5 x 5 mm aufweist, dessen erzeugtes Bild für den Benutzer der Brille als virtuelles Bild in einer Entfernung von 3000 mm unter einem Blickwinkel von 7° x 10° sichtbar sein soll, sollte die Abbildungsoptik eine Brennweite von z.B. 28,5 mm aufweisen. Diese optische Weglänge zusammen mit den Bauvolumina der erforderlichen optischen Bauelemente (wie z.B. Linsen und Prismen) und des Bildgebers sind jedoch so groß, dass sie kaum im Brillenbügel untergebracht werden können. Anders gesagt, die Verwendung herkömmlicher optischer Bauelemente, wie z.B. Linsen und Prismen, für das Abbildungssystem und die entsprechende Anordnung dieser Bauelemente führen zu einem Bauvolumen, das die Gestaltung einer ergonomisch akzeptablen und ästhetisch ansprechenden Anzeigevorrichtung praktisch ausschließt.

Die DE 10 2009 010 537 A1 zeigt ein einen Auskoppelabschnitt aufweisendes Brillenglas für eine auf den Kopf eines Benutzers aufsetzbare und ein Bild erzeugende Anzeigevorrichtung. Das Brillenglas kann ein in das Brillenglas eingekoppeltes Bild der Anzeigevorrichtung durch Reflexionen an der Vorder- und Rückseite des Brillenglases bis zum Auskoppelabschnitt führen, über den es zur Erzeugung eines virtuellen Bildes ausgekoppelt wird.

Die US 2008/0043347 A1 beschreibt eine Fokussieroptik mit mehreren Prismen für beispielsweise einen Fotoapparat, wobei die Prismen relativ zueinander bewegbar sind.

Weitere Abbildungsoptiken für auf den Kopf eines Benutzers aufsetzbare Anzeigevorrichtungen sind aus WO 01/95027 A2, WO 2013/173732 A1 und WO 2007/062098 A2 bekannt.

Ausgehend hiervon ist es daher Aufgabe der Erfindung, eine Abbildungsoptik der eingangs genannten Art so weiterzubilden, dass sie möglichst kompakt ausgebildet werden kann.

Erfindungsgemäß wird die Aufgabe bei einer Abbildungsoptik der eingangs genannten Art dadurch gelöst, dass das Optikelement neben der Eintrittsfläche mindestens eine reflektierende Fläche, an der das erzeugte Bild zur Führung im Optikelement reflektiert wird, aufweist, und dass das Optikelement und das Brillenglas zusammen als einstückiges Optikteil ausgebildet sind.

Durch diese Ausbildung wird die Trennung zwischen Brillenglas und Optikelement aufgehoben und es ist nicht mehr notwendig, das erzeugte Bild über eine Grenzfläche des Brillenglases in dieses einzukoppeln, was aufgrund der Brechung an der Grenzfläche des Brillenglases zu sehr angespannten optischen Verhältnissen im Brillenglas führen kann. So kann beispielsweise das Licht unter nahe an der Totalreflexionsgrenze liegenden Winkeln auf die Vorder- und/oder Rückseite des Brillenglases treffen, was nachteilig bei der Führung des Lichtes im Brillenglases und der Auskopplung aus dem Brillenglas ist.

Ferner wird bei der erfindungsgemäßen Abbildungsoptik vorteilhaft eine Reduzierung von Falsch- bzw. Streulicht erreicht.

Unter der einstückigen Ausbildung wird hier insbesondere verstanden, dass das Optikteil keine Luftspalte und somit keine entsprechenden Grenzflächen zur Führung des erzeugten Bildes im Optikteil aufweist. So kann das Optikteil beispielsweise aus einem separaten Optikelement und einem separaten Brillenglas gebildet sein, die so miteinander kontaktiert sind, dass keine Luftspalte im Optikteil vorhanden sind, die das erzeugte Bild bei der Führung im Optikteil durchlaufen müsste. Das Optikteil kann mit dem Brillenglas z.B. verkittet oder verklebt sein. Es liegt dann eine dauerhafte Verbindung vor, die häufig nicht ohne Beschädigung des Optikteils und/oder des Brillenglases getrennt werden kann.

Ferner kann das Optikteil auch gleich einstückig hergestellt werden. Es ist beispielsweise ein Spritzgießen möglich. Auch kann das Optikteil aus Vollmaterial durch materialabtragende Bearbeitungsverfahren hergestellt sein. Bei dieser einstückigen Herstellung liegt dann ein Optikteil vor, das auch keine inneren Kittflächen oder innere Klebeflächen aufweist, die das erzeugte Bild bei der Führung am Optikteil durchlaufen würde.

Bei der erfindungsgemäßen Abbildungsoptik kann das Optikteil, in einer Ansicht von oben gesehen, eine L-Form aufweisen. Insbesondere kann das Optikelement von der Rückseite des Brillenglases vorstehen. Dies kann zu der beschriebenen L-Form führen.

Die Führung des erzeugten Bildes im Optikelement und im Brillenglas und somit im Optikteil kann durch Reflexionen und/oder innere Totalreflexionen erfolgen. Falls die Führung durch Reflexionen bewirkt werden soll, sind eventuell reflektierende Beschichtungen oder reflektierende Flächen vorzusehen. Die Reflexionen können an äußeren Grenzflächen des Optikteils (wie z.B. Vorder- und Rückseite des Brillenglases) und/oder an innen liegenden Flächen bewirkt werden.

Der Auskoppelabschnitt ist vom Einkoppelabschnitt, über den das erzeugte Bild vom Optikelement in das Brillenglas eingekoppelt wird, lateral beabstandet. Es findet somit bevorzugt stets zumindest eine Reflexion oder mehrere Reflexionen im Brillenglas (z.B. eine Reflexion an der Vorderseite und eine Reflexion an der Rückseite des Brillenglases) zur Führung des erzeugten Bildes nach der Einkopplung in das Brillenglas bis zum Auskoppelabschnitt statt. Der Auskoppelabschnitt ist somit bevorzugt lateral vom Optikelement beabstandet.

Gemäß der beanspruchten Erfindung ist die Eintrittsfläche und optional auch die mindestens eine reflektierende Fläche gekrümmt ausgebildet, so dass das Optikelement eine abbildende Eigenschaft aufweist.

Durch diese Ausbildung des Optikelementes kann die gewünschte räumliche Anpassung bei gleichzeitiger Bereitstellung der notwendigen optischen Weglänge sowie einer abbildenden Funktion erreicht werden. Es sind also nicht mehr mehrere einzelne Linsen, Prismen und sonstige optische Bauelemente notwendig, sondern es wird erfindungsgemäß ein speziell angepasstes Optikelement bereitgestellt, das die notwendigen optischen und mechanischen Randbedingungen erfüllt.

Das Optikelement kann insbesondere einstückig ausgebildet sein. Es ist jedoch auch möglich, dass es mehrstückig ausgebildet ist und die mehreren Teilstücke in direktem Kontakt miteinander stehen (z.B. verkittet oder verklebt), so dass ein einzelnes Optikelement bereitgestellt ist. Das Optikelement ist insbesondere dadurch gekennzeichnet, dass die Führung des erzeugten Bildes bzw. des entsprechenden Lichtes im Optikelement, das z.B. aus Kunststoff oder Glas gebildet sein kann, ohne etwaige Luftspalte erfolgt.

Die Eintrittsfläche des Optikelementes ist gekrümmt ausgebildet.

Des Weiteren dient die Eintrittsfläche als Reflexionsfläche zur Führung des erzeugten Bildes. Die Reflexion kann z.B. mittels innerer Totalreflexion bewirkt werden. Somit wirkt die Eintrittsfläche transmissiv bei der Einkopplung des erzeugten Bildes und reflektiv bei der Führung des eingekoppelten Bildes. Ferner ist es möglich, die Eintrittsfläche teilreflektiv auszubilden (z.B. durch Aufbringen einer geeigneten Reflexionsschicht).

Das Optikelement kann zur Führung des erzeugten Bildes eine einzige Reflexion oder auch mehrere Reflexionen bewirken. Bevorzugt werden mindestens zwei, drei, vier, fünf Reflexionen bewirkt. Die Anzahl der Reflexionen liegt bevorzugt im Bereich von zwei bis zehn und wird bevorzugt in Abhängigkeit der Position eines Bildgebers des Bilderzeugungsmoduls und der Brennweite der Abbildungsoptik gewählt.

Bei der erfindungsgemäßen Abbildungsoptik können die Grenzflächen des Optikelements, die nicht zur Führung und/oder Ein- oder Auskopplung des erzeugten Bildes dienen, geschwärzt und/oder absorbierend für Licht sein. Damit wird eine gute Streulichtunterdrückung erreicht.

Das Brillenglas kann eine gekrümmte oder plane Vorderseite sowie eine gekrümmte oder plane Rückseite aufweisen. Der Auskoppelabschnitt kann eine abbildende Wirkung aufweisen. Der Auskoppelabschnitt kann reflektiv, transmissiv und/oder refraktiv sein.

Bei der erfindungsgemäßen Abbildungsoptik kann das Optikelement an einem Randbereich des Brillenglases ausgebildet sein. Bevorzugt ist die Dicke des Randbereiches größer als die Dicke des Bereiches des Brillenglases, in dem der Auskoppelabschnitt liegt.

Insbesondere kann der Krümmungsverlauf der Vorder- und/oder Rückseite des Brillenglases im Randbereich vom entsprechenden vorbestimmten Krümmungsverlauf der Vorder- und/oder Rückseite im Randbereich so abweichen, dass eine größere Dicke des Brillenglases im Randbereich im Vergleich zu der Dicke im Randbereich vorliegt, die sich durch den vorbestimmten Krümmungsverlauf ergeben würde.

Man nutzt somit die Tatsache aus, dass der gezielt "verdickte" Randbereich ein Bereich ist, der außerhalb des Bereiches liegt, durch den der Benutzer bei einem bestimmungsgemäßen Gebrauch der Abbildungsoptik blickt. Es liegt somit kein Eingriff in das Sehfeld des Benutzers vor, der vom Benutzer als nachteilig angesehen würde. Dies wird z.B. vorteilhaft dazu ausgenutzt, dass durch die Verdickung eine unerwünschte Vignettierung verringert werden kann. Ferner kann beispielsweise erreicht werden, dass die Einfallswinkel bei Führung durch Totalreflexion an Vorder- und Rückseite nicht zu groß werden, wodurch z.B. Astigmatismus und Koma vermieden bzw. verringert werden können.

Insbesondere kann die Gestaltung des Randbereichs zur Verbesserung der optischen Abbildungseigenschaften der Abbildungsoptik eingesetzt werden. Man hat somit mit der möglichen Gestaltung bzw. möglichen Form des Randbereiches einen sehr effizienten Freiheitsgrad bei der optischen Auslegung der Abbildungsoptik. Dieser kann z.B. zur Korrektur von Abbildungsfehlern genutzt werden. Insbesondere kann die Vorderseite und/oder Rückseite im Bereich des Randbereichs die Krümmung einer Freiformfläche aufweisen.

Das Brillenglas und das Optikelement können jeweils z.B. aus Glas oder Kunststoff hergestellt sein.

Bei der erfindungsgemäßen Abbildungsoptik kann die Vorderseite und die Rückseite des Brillenglases jeweils einen vorbestimmten Krümmungsverlauf aufweisen, wobei der Krümmungsverlauf der Vorder- und/oder Rückseite des Brillenglases vom entsprechenden vorbestimmten Krümmungsverlauf der Vorder- und/oder Rückseite im Bereich des Einkoppelabschnittes (oder im Randbereich des Brillenglases) so abweichen/abweicht, dass eine größere Dicke des Brillenglases im Bereich des Einkoppelabschnittes (oder im Randbereich des Brillenglases) im Vergleich zur Dicke des Brillenglases im Bereich des Auskoppelabschnittes, im Vergleich zur Dicke des Brillenglases in einem an den Einkoppelabschnitt (oder an den Randbereich) angrenzenden (insbesondere unmittelbar angrenzenden) Bereich des Brillenglases und/oder im Vergleich zur Dicke im Bereich des Einkoppelabschnittes (oder im Randbereich des Brillenglases), die sich durch den vorbestimmten Krümmungsverlauf ergeben würde, vorliegt. Die Abweichung vom vorbestimmten Krümmungsverlauf ist insbesondere dadurch erkennbar, dass die optische Funktion des Brillenglases im Bereich des abweichenden Krümmungsverlaufes verschieden ist zum restlichen Bereich des Brillenglases. Wenn das Brillenglas beispielsweise als Brillenglas ohne optische Wirkung (z.B. ohne optische Fehlsichtigkeitskorrektur) ausgebildet ist, liegt im Bereich des Einkoppelabschnittes eine nicht gewünschte optische Wirkung vor, die der Betrachter wahrnehmen würde, wenn er durch diesen Bereich blicken würde. Der Einkoppelabschnitt liegt jedoch in einem Bereich des Brillenglases (z.B. im Randbereich), der beim normalen Sehen in der Regel nicht benutzt wird. Wenn das Brillenglas eine Sehfehlerkorrektur bereitstellt, ist diese im Bereich des abweichenden Krümmungsverlaufes nicht oder nicht mehr im gleichen Maße vorhanden.

Der Randbereich beginnt z.B. ab einer Blickrichtung von größer als 20°, 30°, 40° oder 50° (insbesondere bezogen auf die Richtung bei Geradeausblick) beim bestimmungsgemäßen Gebrauch der erfindungsgemäßen Abbildungsoptik.

Bei der erfindungsgemäßen Abbildungsoptik kann die Vorderseite und die Rückseite des Brillenglases jeweils eine sphärische Krümmung aufweisen, wobei die Rückseite im Bereich des Einkoppelabschnittes und/oder im Randbereich des Brillenglases einen von der sphärischen Krümmung abweichenden Krümmungsverlauf aufweisen kann. Somit kann der Bereich des Einkoppelabschnittes und/oder der Randbereich des Brillenglases insbesondere eine größere Dicke als ein an den Einkoppelabschnitt und/oder an den Randbereich angrenzender (bevorzugt unmittelbar angrenzender) Brillenglasbereich aufweisen. Es ist jedoch auch möglich, dass die Vorderseite und/oder Rückseite einen nicht sphärischen Krümmungsverlauf aufweist. Dies ist z.B. der Fall, wenn das Brillenglas zur Korrektur einer Fehlsichtigkeit dient.

Der abweichende Krümmungsverlauf kann insbesondere dazu benutzt werden, um die Abbildungsqualität der Abbildungsoptik zu verbessern. Beispielsweise führt die Führung im Brillenglas häufig zu Abbildungsfehlern, die durch die entsprechende Ausbildung des abweichenden Krümmungsverlaufes kompensiert werden kann.

Insbesondere kann die eine reflektierende Fläche des Optikelementes als asphärische Fläche ausgebildet sein. Die asphärische Fläche kann insbesondere keine Rotationssymmetrie aufweisen. Insbesondere kann sie als Freiformfläche ausgebildet sein. Unter einer Freiformfläche wird hier insbesondere eine gekrümmte Fläche verstanden, die in zwei unterschiedlichen Hauptschnitten unterschiedliche Krümmungen aufweist und/oder die gekrümmt ist und keine Rotationssymmetrie aufweist.

Auch die anderen reflektierenden Flächen des Optikelementes und der durch den abweichenden Krümmungsverlauf gebildete Flächenabschnitt können jeweils als asphärische Fläche und insbesondere als Freiformfläche ausgebildet sein.

Es wird ferner eine Anzeigevorrichtung mit einer auf den Kopf eines Benutzers aufsetzbaren Haltevorrichtung, einem an der Haltevorrichtung befestigten Bilderzeugungsmodul, das ein Bild erzeugt, und einer an der Haltevorrichtung befestigten, erfindungsgemäßen Abbildungsoptik (einschließlich ihrer erfindungsgemäßen Weiterbildungen) bereitgestellt, wobei die erfindungsgemäße Abbildungsoptik das erzeugte Bild im auf den Kopf aufgesetzten Zustand der Haltevorrichtung so abbildet, dass es der Benutzer als virtuelles Bild wahrnehmen kann.

Bevorzugt ist die erfindungsgemäße Anzeigevorrichtung so ausgebildet, dass zwischen dem Bilderzeugungsmodul und dem Brillenglas keine weiteren optischen Bauelemente (mit oder ohne abbildender Eigenschaft) angeordnet sind. Es ist jedoch möglich, zwischen dem Bilderzeugungsmodul und dem Optikelement einen Umlenkspiegel vorzusehen. Der Umlenkspiegel soll bevorzugt eine reine Umlenkung bewirken und ist daher plan ausgebildet. Es ist jedoch auch möglich, diesen Umlenkspiegel mit einer abbildenden Eigenschaft bereitzustellen, so dass die Spiegelfläche eine vorbestimmte Krümmung aufweist.

Bei der erfindungsgemäßen Anzeigevorrichtung kann die Haltevorrichtung brillenartig ausgebildet sein und einen ersten und einen zweiten Brillenbügel aufweisen, wobei das Optikelement zumindest teilweise bzw. ein Teil des einstückigen Optikteils in einem der beiden Brillenbügel angeordnet ist.

Das Bilderzeugungsmodul kann insbesondere einen flächigen Bildgeber aufweisen, wie z.B. ein LCD-Modul, ein LCoS-Modul, ein OLED-Modul oder eine Kippspiegelmatrix. Insbesondere kann der Bildgeber ein OLED-, ein LCD-, ein LCoS- und/oder ein DotMatrix-Mikrodisplay aufweisen. Ferner kann der Bildgeber ein LED-Segmentdisplay aufweisen. Des Weiteren kann der Bildgeber ein direkt scannendes Laserdisplaymodul (und eventuell mit einer Optik zum Pupillenmatching) aufweisen. Ferner kann der Bildgeber ein scannendes Laserdisplaymodul mit streuendem Medium in einer Zwischenbildebene vor dem Optikteil oder vor dem Brillenglas und einer Optik zum Pupillenmatching aufweisen.

Der Bildgeber kann selbstleuchtend oder nicht selbstleuchtend sein.

Das Bilderzeugungsmodul kann insbesondere so ausgebildet sein, dass ein monochromatisches oder ein mehrfarbiges Bild erzeugt wird.

Die erfindungsgemäße Anzeigevorrichtung kann als Datenbrille ausgebildet sein, bei der das erzeugte Bild z.B. darzustellende Daten enthält.

Die erfindungsgemäße Anzeigevorrichtung kann weitere, dem Fachmann bekannte Elemente aufweisen, die zu ihrem Betrieb notwendig sind.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:

Fig. 1    eine schematische perspektivische Darstellung einer Ausführungsform der erfindungsgemäßen Anzeigevorrichtung;
Fig. 2    eine vergrößerte perspektivische Detailansicht von Fig. 1;
Fig. 3    eine vergrößerte perspektivische Ansicht des Optikelementes 8 der Anzeigevorrichtung gemäß Fig. 1 und 2;
Fig. 4    eine vergrößerte Detailschnittansicht der Anzeigevorrichtung von Fig. 1;
Fig. 5    eine vergrößerte perspektivische Detailansicht der Abbildungsoptik einer nicht beanspruchten *Ausführungsform*
Fig. 6    eine vergrößerte perspektivische Ansicht des Optikelementes 8 von Fig. 5;
Fig. 7    eine Detailschnittansicht in der Anzeigevorrichtung gemäß Fig. 5;
Fig. 8    eine schematische Detailschnittansicht einer nicht beanspruchten Ausführungsform der Abbildungsoptik;
Fig. 9    eine schematische Detailschnittansicht einer weiteren nicht beanspruchten Ausführungsform der Abbildungsoptik;
Fig. 10   eine schematische Detailschnittansicht einer weiteren nicht beanspruchten Ausführungsform der Abbildungsoptik;
Fig. 11   eine schematische Darstellung zur Erläuterung einer weiteren nicht beanspruchten Ausführungsform der Abbildungsoptik 7, und
Fig. 12   eine perspektivische Darstellung des Optikteils 28 gemäß der Ausführungsform von Fig. 11.

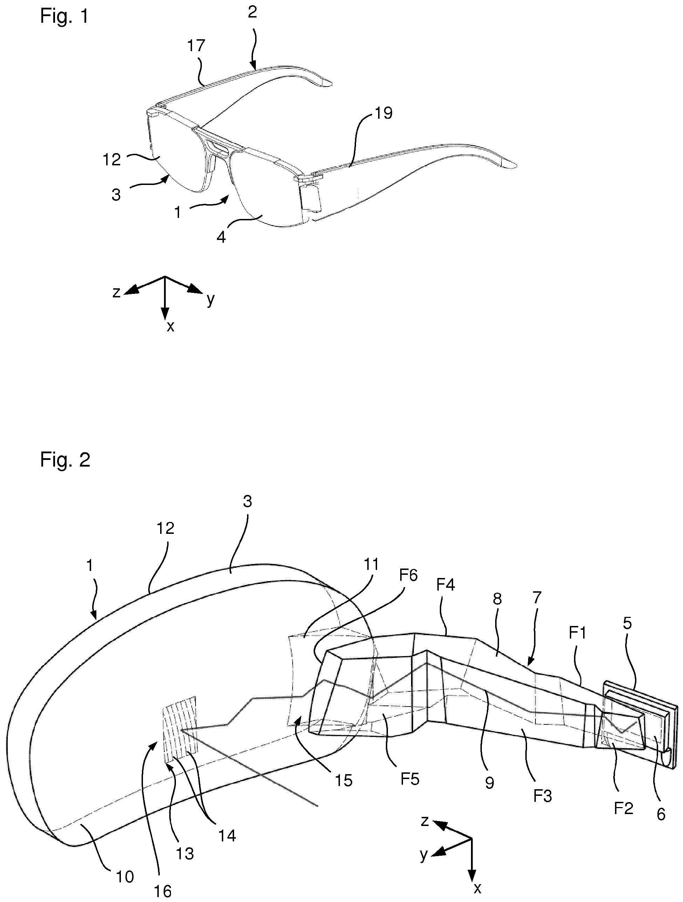

Bei der in Fig. 1 gezeigten Ausführungsform umfasst die erfindungsgemäße Anzeigevorrichtung 1 eine auf den Kopf eines Benutzers aufsetzbare Haltevorrichtung 2, die in der hier beschriebenen Ausführungsform als herkömmliches Brillengestell ausgebildet ist, sowie ein erstes und zweites Brillenglas 3, 4, die an der Haltevorrichtung 2 befestigt sind. Die Haltevorrichtung 2 mit den Brillengläsern 3 und 4 kann z.B. als Sportbrille, Sonnenbrille und/oder Brille zur Korrektur einer Fehlsichtigkeit ausgebildet sein, wobei dem Benutzer über das erste Brillenglas 3 ein virtuelles Bild in sein Gesichtsbild eingespiegelt werden kann, wie nachfolgend beschrieben wird.

Wie am besten aus der vergrößerten perspektivischen Teilansicht in Fig. 2 ersichtlich ist (die Haltevorrichtung 2 ist nicht dargestellt), umfasst die Anzeigevorrichtung 1 ein Bilderzeugungsmodul 5, das einen Bildgeber 6 (z.B. ein OLED-Modul) aufweist, mit dem ein Bild erzeugt werden kann, das als das virtuelle Bild in das Gesichtsfeld des Benutzers eingespiegelt werden soll. Dazu weist die Anzeigevorrichtung 1 eine Abbildungsoptik 7 auf, die ein zwischen dem Bildgeber 6 und dem ersten Brillenglas 3 angeordnetes Optikelement 8 enthält. Des Weiteren dient das erste Brillenglas 3 selbst auch als Teil der Abbildungsoptik 7.

Die Abbildungsoptik 7 ist als solche als erfindungsgemäße Abbildungsoptik 7 ausgebildet und ist bevorzugt für eine auf den Kopf eines Benutzers aufsetzbare und ein Bild erzeugende Anzeigevorrichtung ausgelegt. Die Abbildungsoptik 7 wird hier nur zur Verdeutlichung ihrer erfindungsgemäßen Ausbildung mit der Haltevorrichtung 2 gemäß Fig. 1 beschrieben. Die Abbildungsoptik 7 kann jedoch auch für jede andere Haltevorrichtung ausgelegt werden.

Die erfindungsgemäße Abbildungsoptik 7 ist in Verbindung mit Fig. 1 bis 7 nachfolgend auch so beschrieben, dass ein Luftspalt zwischen dem Optikelement 8 und dem Brillenglas 3 vorliegt. Dies dient jedoch nur zur Verdeutlichung der erfindungsgemäßen Abbildungsoptik 7, die einstückig ist, so dass kein Luftspalt vorhanden ist. Entweder sind Optikelement 8 und Brillenglas 3 so miteinander verbunden, dass das zu führende Bild des Bildgebers 6 bei Führung im Optikelement 8 und Brillenglas 3 keinen Luftspalt durchlaufen muss, oder Optikelement 8 und Brillenglas 3 sind bereits als ein Stück hergestellt. Auch die Eintrittsfläche F1 wird als plan beschrieben, erfindungsgemäß weist diese jedoch eine Krümmung auf.

Der Bildgeber 6 ist als flächiger Bildgeber mit einer Vielzahl von z.B. in Spalten und Zeilen angeordneten Pixeln ausgebildet, wobei von jedem Pixel ein Lichtbündel 9 ausgehen kann. Durch eine entsprechende Ansteuerung der Pixel kann das gewünschte Bild erzeugt werden. In Fig. 2 ist stellvertretend für die Lichtbündel 9 der Strahlengang eines Lichtstrahles eingezeichnet, so dass nachfolgend auch von dem Lichtstrahl 9 die Rede ist.

Der vom Bildgeber 6 ausgehende Lichtstrahl 9 tritt über eine plane Eintrittsfläche F1 des Optikelementes 8 in das Optikelement 8 ein und trifft auf eine gegenüberliegende plane Reflexionsfläche F2. Der Lichtstrahl 9 wird von der Reflexionsfläche F2 zur Eintrittsfläche F1 zurückreflektiert und trifft wiederum auf die Eintrittsfläche F1, jedoch an einer anderen Stelle im Vergleich zum Eintritt in das Bilderzeugungsmodul 5 und unter einem solchen Winkel, so dass eine Reflexion des Lichtstrahls 9 aufgrund innerer Totalreflexion zu einer weiteren planen Reflexionsfläche F3 stattfindet. Wie der Darstellung in Fig. 2 zu entnehmen ist, finden weitere Reflexionen an den planen Reflexionsflächen F4 und F5 statt und das Lichtbündel 9 trifft dann auf die transparente Austrittsfläche F6, die gekrümmt ausgebildet ist und somit eine abbildende Wirkung aufweist. Über die Austrittsfläche F6 tritt der Lichtstrahl 9 aus dem Optikelement 8 aus, durchläuft die Luftstrecke bis zur Rückseite 10 des ersten Brillenglases 3 und tritt über die Rückseite 10 in das erste Brillenglas 3 ein.

In dem Brillenglas 3 ist in diesem Bereich eine Reflexionsfläche 11 ausgebildet, die den Lichtstrahl 9 so zur Rückseite 10 umlenkt, dass er an der Rückseite 10 eine innere Totalreflexion durchläuft und zur Vorderseite 12 des ersten Brillenglases reflektiert wird. An der Vorderseite 12 erfolgt ebenfalls eine innere Totalreflexion und nach einer weiteren inneren Totalreflexion an der Rückseite 10 trifft der Lichtstrahl 9 auf eine an der Vorderseite 12 ausgebildete Fresnelfläche 13, die mehrere nebeneinanderliegende reflektive Facetten 14 aufweisen. Die reflektiven Facetten 14 führen zu einer Reflexion in Richtung zur Rückseite 10 in der Art, dass der Lichtstrahl 9 über die Rückseite 10 aus dem Brillenglas 3 austritt und dann vom Benutzer, der die Anzeigevorrichtung 1 bestimmungsgemäß auf dem Kopf trägt, wahrgenommen werden kann.

Aufgrund der beschriebenen Lichtbündelleitung des Optikelementes 8 kann dieses auch als Lichtleiter 8, insbesondere als bilderhaltender und/oder abbildender Lichtleiter, bezeichnet werden.

Der Bereich des ersten Brillenglases 3 mit der Reflexionsfläche 11 kann als Einkoppelabschnitt 15 bezeichnet werden, wobei hier die Reflexionsfläche 11 gekrümmt ausgebildet ist und somit eine abbildende Wirkung aufweist.

Der Bereich mit der Fresnelfläche 13 kann als Auskoppelabschnitt 16 bezeichnet werden, wobei die Facetten 14 hier gekrümmt ausgebildet sein können und somit die Fresnelfläche 13 insgesamt ebenfalls eine abbildende Wirkung aufweisen kann.

Die Rückseite 10 des Brillenglases kann plan oder gekrümmt sein. Insbesondere kann die Rückseite 10 sphärisch gekrümmt sein. Ferner kann die Vorderseite 12 des Brillenglases plan oder gekrümmt sein.

Die Krümmung der Austrittsfläche F6, der Reflexionsfläche 11 und/oder der Facetten 14 kann eine sphärische Krümmung, eine asphärische Krümmung oder die Krümmung einer Freiformfläche sein. Unter einer Freiformfläche wird insbesondere eine gekrümmte Fläche verstanden, die in zwei unterschiedlichen Hauptschnitten unterschiedliche Krümmungen aufweist und/oder die gekrümmt ist und keine Rotationssymmetrie aufweist.

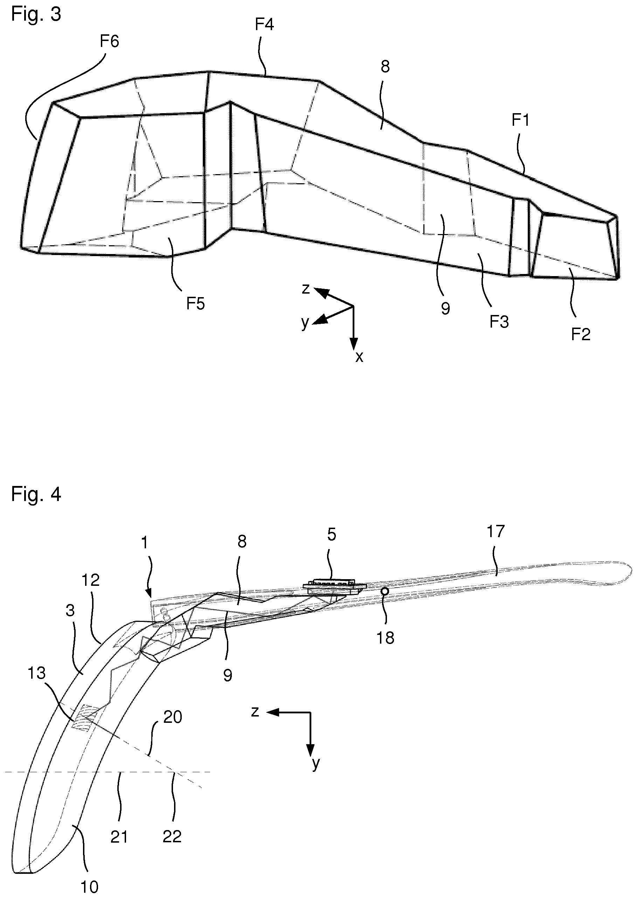

Das Optikelement 8 ist in Fig. 3 alleine nochmals vergrößert dargestellt. Andere Grenz- oder Randflächen des Optikelementes 8 als die beschriebenen Flächen F1-F6 sind geschwärzt und/oder als absorbierende Flächen in der Art ausgebildet, dass auf diese Flächen fallendes Licht absorbiert wird, was zur Streulichtunterdrückung bzw. Falschlichtunterdrückung beiträgt. Bei dem hier beschriebenen Ausführungsbeispiel handelt es sich um 18 absorbierende Grenz- bzw. Randflächen, wobei diese Zahl nicht funktionsbestimmend ist, sondern im Wesentlichen aus der hier vorgesehenen spangebenden Herstellung des Optikelementes 8 rühren. Natürlich kann die Anzahl der absorbierenden Randflächen weniger oder mehr als 18 betragen. Die Flächen sind hier als plane Flächen ausgebildet. Sie können beispielsweise teilweise als gekrümmte Flächen zusammengefasst werden. Bei einem urformenden Fertigungsverfahren (wie z.B. Spritzguss) lässt sich dies leicht realisieren.

Wie insbesondere der schematischen Schnittdarstellung in Fig. 4 entnommen werden kann, ist das Optikelement 8 so ausgebildet, dass es in dem rechten Brillenbügel 17 der Haltevorrichtung 2 eingebaut werden kann. Der rechte Brillenbügel 17 dient dann als Gehäuse für das Optikelement 8. Bei dieser Ausführungsform ist der rechte Brillenbügel 17 fest mit dem rechten Brillenglas 3 verbunden, so dass eine definierte und nicht änderbare mechanische Verbindung und Ausrichtung zwischen dem Optikelement 8 und dem rechten Brillenglas 3 vorliegt. Der rechte Brillenbügel 17 kann ein schematisch dargestelltes Gelenk 18 aufweisen, so dass der hintere Teil des rechten Brillenbügels 17 gegenüber dem vorderen Teil, der das Optikelement 8 enthält, verschwenkt werden kann (hier z.B. um eine Achse die senkrecht zur Zeichenebene von Fig. 4 verläuft).

Wie den Darstellungen in Fig. 1 bis 4 ferner entnommen werden kann, ist der Bildgeber 6 möglichst platzsparend im rechten Brillenbügel 17 angeordnet und erstreckt sich somit einerseits senkrecht zur Zeichenebene gemäß Fig. 4 (x-Richtung) und andererseits im Wesentlichen in Längsrichtung des Brillenbügels 17 (und somit von links nach rechts in Fig. 4 bzw. entlang der z-Richtung). Die Eintrittsfläche F1 des Optikelementes 8 ist im Wesentlichen parallel zum Bildgeber 6 orientiert und erstreckt sich somit auch im senkrecht zur Zeichenebene in Fig. 4 und von links nach rechts in Fig. 4.

Die Austrittsfläche F6 des Optikelementes 8 liegt vor der Rückseite 10 des rechten Brillenglases 3 (möglichst tangential), was dazu führt, dass neben dem räumlichen Versatz zwischen diesen beiden Flächen F1 und F6 auch eine Verkippung um alle drei Raumachsen (x-, y- und z-Achse) vorliegt. Die räumliche Ausdehnung bzw. die Abmessungen des Optikelements 8 sind somit bevorzugt so gewählt, dass es in den rechten Brillenbügel 17 integriert werden kann. Des Weiteren ist das Optikelement 8 so ausgelegt, dass es das mittels des Bildgebers 6 erzeugte Bild in abbildender Weise bis zum Einkoppelabschnitt 15 des rechten Brillenglases 3 überträgt bzw. weiterleitet. Gleichzeitig ist die Krümmung der Austrittsfläche F6 so gewählt, dass sie einen Teil der abbildenden Wirkung der Abbildungsoptik 7 übernimmt. Insbesondere kann das Optikelement 8 einen Hauptteil der Abbildung übernehmen. Auch kann das Optikelement 8 zur Korrektur von Abbildungsfehlern ausgelegt sein, die insbesondere durch die Führung des Bildes bzw. Lichtstrahls 9 im Brillenglas 3 auftritt.

Somit wurden bei der Auslegung des Optikelementes 8 sowohl mechanische als auch optische Randbedingungen berücksichtigt, um ein möglichst optimales Ergebnis zu erzielen.

Der Bildgeber 6 weist hier eine Fläche von 3,5 x 5 mm auf. Die Abbildungsoptik 7 weist eine Brennweite von 28,5 mm auf und erzeugt das virtuelle Bild für den Benutzer in einer Entfernung von 3000 mm unter einem Blickwinkel von 7° x 10°.

Wie Fig. 4 ferner entnommen werden kann, ist die erfindungsgemäße Anzeigevorrichtung 1 so ausgelegt, dass die Blickrichtung 20 zur Erfassung des dargestellten virtuellen Bildes verschieden ist zu der Geradeaus-Blickrichtung 21. Der Augendrehpunkt wird mit dem Bezugzeichen 22 gekennzeichnet.

Natürlich kann die Anzeigevorrichtung 1 auch so ausgebildet sein, dass die Blickrichtung 20 zur Erfassung des virtuellen Bildes mit der Geradeaus-Blickrichtung 21 zusammenfällt.

Das Optikelement 8 ist bevorzugt einstückig ausgebildet und kann aus einem Glasmaterial oder einem Kunststoffmaterial hergestellt sein. Auch das erste und zweite Brillenglas 3, 4 kann aus einem Glasmaterial oder einem Kunststoffmaterial hergestellt sein.

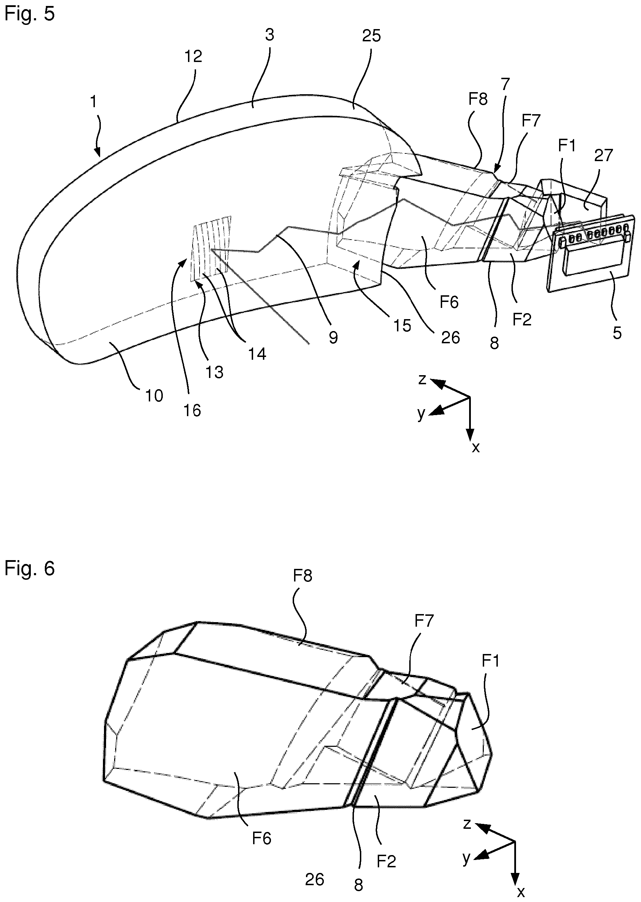

In Fig. 5 bis 7 ist in gleicher Weise wie in Fig. 2 bis 4 eine zweite, nicht unter die beanspruchte Erfindung fallende Ausführungsform der Anzeigevorrichtung gezeigt, wobei gleiche oder ähnliche Elemente mit gleichen Bezugszeichen bezeichnet sind und zu deren Beschreibung auf die obigen Ausführungen verwiesen wird.

Bei der Ausführungsform gemäß Fig. 5 bis 7 ist das Optikelement 8 anders ausgebildet, da der Einkoppelabschnitt 15 an der die Vorder- und Rückseite 12, 10 verbindenden Randfläche 25 des ersten Brillenglases 3 ausgebildet ist. Dazu ist an der Randfläche 25 eine zylindrische Einkoppelfläche 26 ausgebildet.

Wie dem in Fig. 5 gezeigten Strahlengang zu entnehmen ist, wird der Lichtstrahl 9 über einen Umlenkspiegel 27 auf die plane Eintrittsfläche F1 des Optikelementes 8 gerichtet, so dass der Lichtstrahl 9 über die Eintrittsfläche F1 in das Optikelement 8 eintritt. Im Optikelement 8 finden vier Reflexionen an den Flächen F2, F7, F6, F8 statt und der Lichtstrahl 9 tritt dann über die Austrittsfläche F6 aus dem Optikelement 8 aus, durchläuft die Luftstrecke bis zur zylindrischen Einkoppelfläche 26 des ersten Brillenglases 3, wird in diesem bis zur Fresnelfläche 13 geführt und dann in der beschriebenen Art und Weise über die Rückseite 10 ausgekoppelt.

Die Flächen F2, F7 und F8 sind als Reflexionsflächen ausgebildet, wobei die Fläche F2 eine plane Fläche ist und die Flächen F7 und F8 gekrümmt sind. Insbesondere können sie als Freiformflächen ausgebildet sein. Die plane Fläche F6 dient einerseits als Reflexionsfläche und andererseits als Austrittsfläche, wobei die Reflexion durch innere Totalreflexion erfolgt.

Andere Randflächen des Optikelementes 8 als die beschriebenen Flächen F1, F2, F6-F8 sind geschwärzt und/oder als absorbierende Flächen in gleicher Weise wie bei der Ausführungsform gemäß Fig. 2-4 ausgebildet.

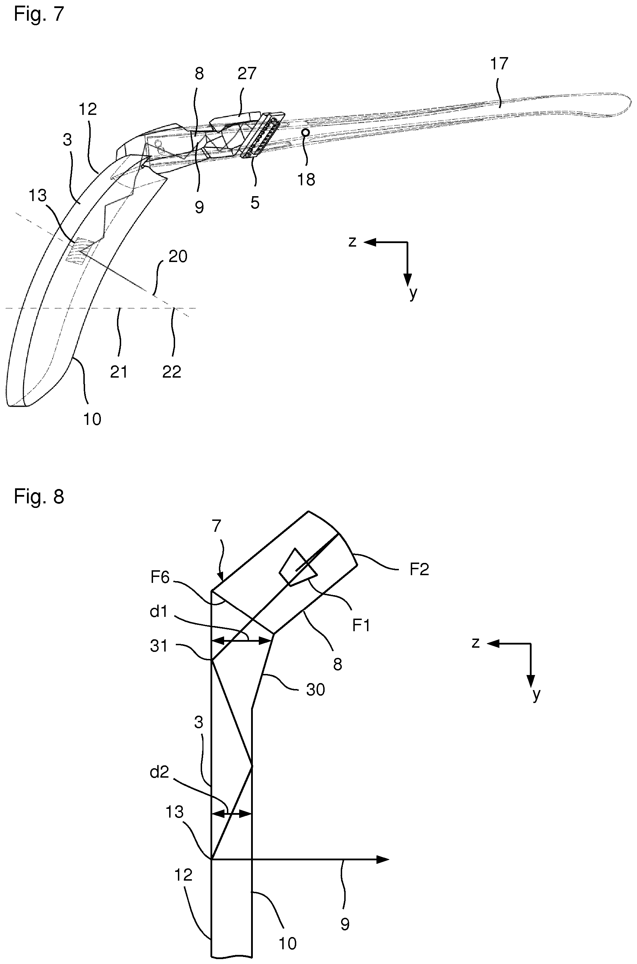

Aufgrund der in den Fig. 5 und 7 gezeigten Orientierung des Bilderzeugungsmoduls 5 ist der Umlenkspiegel 27 zwischen dem Bilderzeugungsmodul 5 und dem Optikelement 8 angeordnet, so dass eine sehr kompakte Ausbildung des Bilderzeugungsmoduls 5 zusammen mit dem Optikelement 8 in Längsrichtung des rechten Brillenbügels 17 möglich ist. Wie ein Vergleich der Fig. 7 und 4 zeigt, ist die Ausdehnung in Längsrichtung des Brillenbügels bei der Ausführungsform gemäß Fig. 7 kürzer als bei der Ausführungsform gemäß Fig. 4.

In Fig. 8 ist in einer stark schematischen Detailschnittansicht eine weitere nicht unter die beanspruchte Erfindung fallende Ausführungsform der Abbildungsoptik 7 gezeigt. Die plane Eintrittsfläche F1 ist hier gegenüber der y-z-Ebene gekippt. Zur Verdeutlichung dieser Verkippung ist die eigentlich rechteckförmige Eintrittsfläche F1 trapezförmig dargestellt. Des Weiteren ist wie bei den vorherigen Darstellungen der Lichtstrahl 9 eingezeichnet, der die Lichtführung und -abbildung im Optikelement 8 und im Brillenglas 3 verdeutlichen soll. Der über die Eintrittsfläche F1 eintretende Lichtstrahl 9 wird an der gekrümmten Reflexionsfläche F2 (die hier z.B. sphärisch gekrümmt ist) zur Austrittsfläche F6 reflektiert und tritt durch diese in das Brillenglas 3 ein, in dem eine Führung durch Reflexion an Vorder- und Rückseite 12, 10 bis zur Fresnelfläche 13 stattfindet. Die Auskopplung erfolgt wiederum über die Fresnelfläche 13.

Die Reflexionsfläche F2 kann beispielsweise zur Kollimation der vom Bildgeber ausgehenden Lichtstrahlen dienen. Somit kann beispielsweise auf eine separate kollimierende Einkoppeloptik verzichtet werden, die zwischen Bildgeber und Eintrittsfläche F1 anzuordnen wäre. Es ist jedoch auch möglich, eine solche separate kollimierende Einkoppeloptik vorzusehen.

Wie der Darstellung in Fig. 8 ferner entnommen werden kann, ist die Austrittsfläche F6 direkt mit einer entsprechenden Fläche des Brillenglases 3 verbunden. Die Verbindung kann beispielsweise durch Verkitten oder Verkleben erfolgen. Bevorzugt sind die Austrittsfläche F6 und die entsprechende Fläche des Brillenglases 3 so geformt, dass ein guter flächiger Kontakt hergestellt werden kann. Beispielsweise sind die beiden Flächen als plane Flächen ausgebildet.

Wie in Fig. 8 ferner schematisch angedeutet ist, kann das Brillenglas 3 so ausgebildet sein, dass es in seinem Randbereich 30 (in dem es mit dem Optikelement 8 verbunden ist) eine größere Dicke d1 aufweist im Vergleich zu der restlichen Dicke d2 des Brillenglases. Bei der Darstellung in Fig. 8 sind die Vorder- und Rückseite 12, 10 schematisch als plane Flächen ausgebildet. Sie können jedoch auch gekrümmt sein. In diesem Fall ist im Randbereich 30 ein Krümmungsverlauf vorgesehen, der von dem vorbestimmten Krümmungsverlauf der Vorder- und/oder Rückseite 12, 10 so abweicht, dass eine größere Dicke d1 des Brillenglases im Randbereich 30 im Vergleich zu der Dicke im Randbereich 30 vorliegt, die sich durch den vorbestimmten Krümmungsverlauf ergeben würde. Der Randbereich 30 kann beispielsweise ab einer Blickrichtung von größer als 20°, 30° oder 40° bezogen auf einen Geradeausblick beginnen.

Bei der gezeigten Ausführungsform in Fig. 8 ist somit zwischen dem Optikelement 8 und dem Brillenglas 3 eine Schnittstelle (hier eine plane Schnittstelle) vorgesehen.

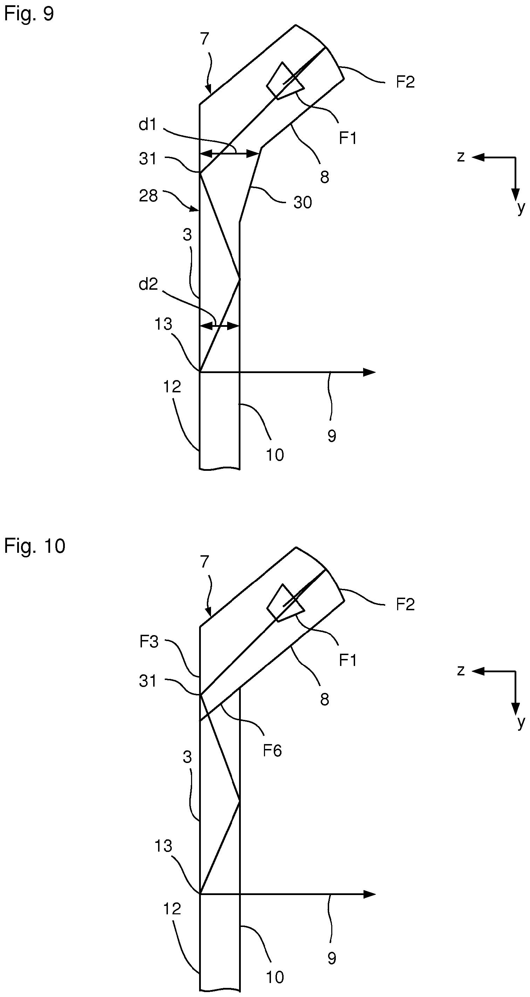

In Fig. 9 ist eine Abwandlung der Abbildungsoptik 7 von Fig. 8 gezeigt. Die Abwandlung in Fig. 9 unterscheidet sich von der Ausführungsform in Fig. 8 darin, dass keine Schnittstelle und somit keine Austrittsfläche F6 vorhanden ist, da die Abbildungsoptik 7 einstückig ausgebildet ist. Man kann auch sagen, dass das Optikelement 8 und das Brillenglas 3 als einstückiges Optikteil 28 ausgebildet sind.

In Fig. 10 ist eine weitere Abwandlung der Abbildungsoptik 7 gemäß Fig. 8 gezeigt. Bei dieser weiteren Abwandlung weist das Brillenglas 3 einerseits keine Randverdickung auf. Andererseits liegt die Schnittstelle, an der das Optikelement 8 mit dem Brillenglas 3 verbunden ist, etwas anders. Die Schnittstelle ist so gelegt, dass im Optikelement 8 zwei Reflexionen stattfinden, so dass dieses neben der Reflexionsfläche F2 noch die weitere Reflexionsfläche F3 aufweist. In der Darstellung von Fig. 10 ist diese Reflexionsfläche F3 als plane Fläche eingezeichnet. Bevorzugt ist sie jedoch gekrümmt ausgebildet. So kann sie eine sphärische Krümmung oder eine Freiformkrümmung aufweisen. Unter einer Freiformkrümmung wird insbesondere eine Krümmung verstanden, die in zwei unterschiedlichen Hauptschnitten unterschiedliche Krümmungen aufweist und/oder die gekrümmt ist und keine Rotationssymmetrie aufweist. Insbesondere kann die Freiformkrümmung nicht sphärisch und nicht rotationssymmetrisch sein. Natürlich können auch die Ausführungsformen gemäß Fig. 8 und 9 so ausgebildet werden, dass die entsprechende Reflexion an einer gekrümmten Fläche stattfindet. Die Reflexion ist in Fig. 8 und 9 mit dem Bezugszeichen 31 bezeichnet. Das bedeutet, dass in diesem Bereich die Grenzfläche entsprechend gekrümmt ausgebildet sein kann.

Bei den beschriebenen Ausführungsformen, bei denen die Austrittsfläche F6 des Optikelementes 8 mit dem Brillenglas 3 direkt verbunden ist, liegt der Vorteil vor, dass die bisher notwendige Einkopplung in das Brillenglas 3 über eine separate Grenzfläche vermieden wird. Dies führt zu dem Vorteil, dass an der Grenzfläche auftretende Brechungen nicht mehr vorliegen. Das Licht bzw. das Lichtbündel 9 läuft einfach im Medium weiter. Bevorzugt werden für das Optikelement 8 und das Brillenglas 3 das gleiche optische Material verwendet.

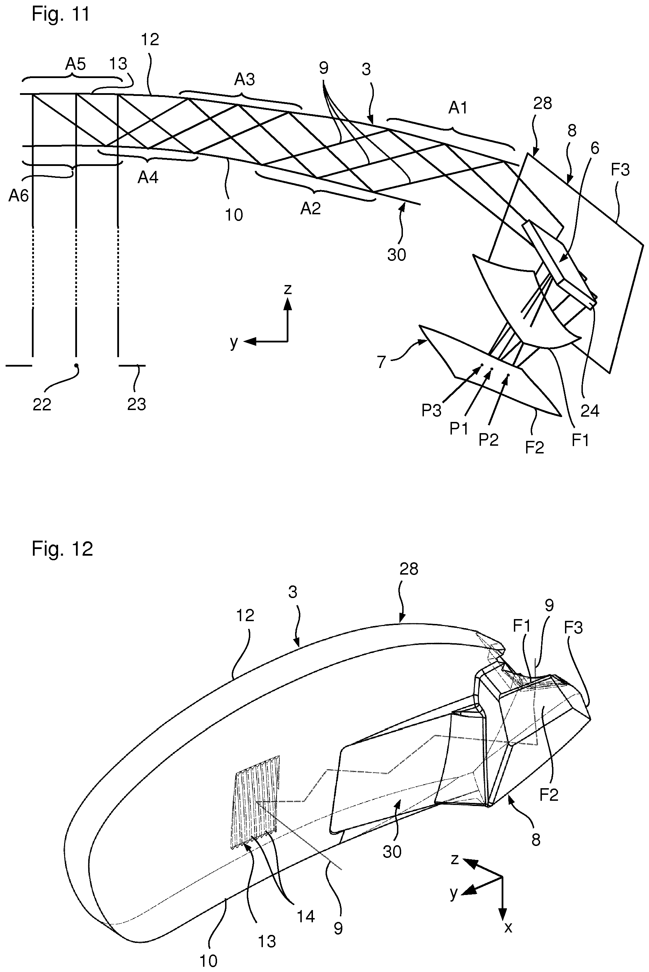

In Figuren 11 und 12 ist eine weitere nicht unter die beanspruchte Erfindung fallende Ausführungsform der Abbildungsoptik 7 gezeigt. Bei dieser Ausführungsform ist das Optikteil 28 einstückig ausgebildet, so dass zwischen dem Optikelement 8 und dem Brillenglas 3 keine innere Grenzfläche wie z.B. eine Kitt- oder Kleberfläche vorliegt. Bei der Darstellung in Figur 11 sind im Wesentlichen nur die optisch genutzten Flächen des Optikteils 28 dargestellt, wobei die Flächen des Optikelementes 8 perspektivisch eingezeichnet sind, um die räumliche Anordnung dieser Flächen zu verdeutlichen. Zusätzlich ist der Bildgeber 6 mit einem Deckglas 24 perspektivisch dargestellt. Des Weiteren ist noch die Austrittspupille 23 der Abbildungsoptik 7 dargestellt, wobei der Augendrehpunkt 22 im Bereich der Austrittspupille 23 liegt, was den bestimmungsgemäßen Gebrauch der Abbildungsoptik 7 verdeutlichen soll. In Fig. 12 ist das Optikteil 28 perspektivisch dargestellt.

Bei der Darstellung in Figur 11 sind drei von einem Bildpunkt des Bildgebers 6 ausgehende Lichtstrahlen 9 eingezeichnet, um den Strahlengang im Optikteil 28 zu verdeutlichen.

Die Lichtstrahlen 9 vom Bildgeber 6 treten über eine erste Fläche F1 in das Optikelement 8 ein und werden an einer zweiten Fläche F2 reflektiert. Der Ort der Reflexion wird durch Punkte, die mit dem Pfeil P1, P2 und P3 bezeichnet sind, angedeutet. Die reflektierten Lichtstrahlen 9 treffen auf eine dritte Fläche F3 des Optikelementes 8 und werden von dieser in Richtung zur Vorderseite 12 reflektiert. An der Vorderseite 12 des Brillenglases 3 findet dann eine erste Reflexion im Bereich A1 in Richtung zur Rückseite 10 statt. Im Bereich A2 der Rückseite 10 findet eine zweite Reflexion im Brillenglas 3 wieder zur Vorderseite 12 statt und die Lichtbündel 9 werden an der Vorderseite 12 im Bereich A3 erneut zur Rückseite 10 hin reflektiert. Im Bereich A4 findet eine weitere Reflexion der Lichtstrahlen 9 zur im Bereich A5 gebildeten Fresnel-Fläche 13 an der Vorderseite 12 statt. Die Fresnel-Fläche 13 lenkt die Lichtstrahlung so in Richtung zur Rückseite 10 um, dass sie über die Rückseite 10 im Bereich A6 aus dem Brillenglas 3 austreten und bis zur Austrittspupille 23 laufen, so dass der Benutzer das mittels des Bildgebers 6 erzeugte Bild als virtuelles Bild wahrnehmen kann.

Die Vorderseite 12 und die Rückseite 10 sind jeweils als sphärisch gekrümmte Fläche ausgebildet, wobei der Radius der Vorderseite 12 120 mm und der Radius der Rückseite 10 116 mm beträgt, so dass das Brillenglas 3 eine Dicke von 4 mm aufweist. Im Randbereich 30 weicht die Rückseite 10 im Bereich A2 von der sphärischen Form ab. Der Bereich A2 ist als Freiformfläche ausgebildet, wie nachfolgend noch im Detail beschrieben wird. Ferner sind die Flächen F1, F2 und F3 des Optikelementes 8 ebenfalls als Freiformflächen ausgebildet.

Die Reflexionen an den Flächen F2, F3 und in den Bereichen A1 - A5 können innere Totalreflexionen oder auch normale Reflexionen sein. Im letzteren Fall ist dann bevorzugt eine entsprechend reflektierende Beschichtung vorgesehen. In einer bevorzugten Variante des Ausführungsbeispiels sind die Flächen F2 und F3 jeweils mit einer reflektierenden Beschichtung versehen, so dass dort jeweils eine normale Reflexion erfolgt. In einer weiteren bevorzugten Variante des Ausführungsbeispiels sind in dem Brillenglas 3 genau fünf gewünschte Reflexionen vorgesehen. In den Bereichen A1 bis A4 des Brillenglases 3 erfolgt die Umlenkung der Lichtbündel 9 an den jeweiligen Glasgrenzflächenabschnitten durch innere Totalreflektion. Die Facetten 14 bzw. Flächenstücke 14 der Fresnel-Fläche 13 sind mit einer teilreflektiven Beschichtung versehen, so dass die Lichtbündel 9 jeweils durch normale Reflexionen in Richtung des Auges des Benutzers umgelenkt werden. Dadurch, dass genau 5 Reflexionen in dem Brillenglas 3 vorgesehen sind, ergeben sich ideale geometrische Verhältnisse für die Strecke, den das vom Bildgeber kommende Licht 9 innerhalb des Brillenglases 3 zurücklegt in Bezug auf den gewünschten Ort der Auskopplung aus dem Brillenglas 3.

Die seitliche Position der Randverdickung bedingt, dass an günstiger Stelle viel Platz zur Verringerung des Footprint-Overlaps geschaffen wird und dass günstig pupillennah mit der dort angeordneten Freiformfläche in die Abbildungsqualität eingegriffen werden kann.

Zur Beschreibung der Flächen F1 - F3 und der Bereich A1 - A6 sowie der Fresnel-Fläche 13 werden in der nachfolgenden Tabelle 1 die Lagen von lokalen Koordinatensystemen (und somit sogenannten flächeneigenen Koordinatensystemen) relativ zu einem globalen Koordinatensystem oder Bezugskoordinatensystem in der Austrittspupille 23 angegeben. Dabei bezeichnet XSC die x-Koordinate des flächeneigenen Koordinatensystems in Millimeter bezüglich des globalen Koordinatensystems. YSC und ZSC bezeichnen entsprechend die y- bzw. z-Koordinate bezüglich des globalen Koordinatensystems in Millimeter. Ferner sind durch ASC, BSC und CSC die Drehungen des flächeneigenen Koordinatensystems um die x-, y- und z-Achse des globalen Koordinatensystems in Grad (grd = °) angegeben, wobei zuerst die Drehung um die globale x-Achse, danach die Drehung um die globale y-Achse und zuletzt die Drehung um die globale z-Achse ausgeführt wird.

Tabelle 1

| Fläche | XSC [mm] | YSC [mm] | ZSC [mm] | ASC [grd] | BSC [grd] | CSC [grd] |
|---|---|---|---|---|---|---|
| 23 | 0.000 | 0.000 | 0.000 | 0.000 | 0.000 | 0.000 |
| A6 | 0.000 | 0.000 | 15.797 | 4.240 | 2.623 | 0.000 |
| A5 | -0.164 | 10.237 | 18.627 | 9.025 | 2.614 | -0.218 |
| A4 | 0.000 | 0.000 | 15.797 | 4.239 | 2.622 | 0.000 |
| A3 | -0.183 | 0.295 | 19.782 | 4.239 | 2.622 | 0.000 |
| A2 | -25.444 | -1.765 | 11.012 | -10.685 | -36.694 | 17.282 |
| A1 | -0.183 | 0.295 | 19.782 | 4.239 | 2.622 | 0.000 |
| F3 | -36.045 | 0.994 | 0.061 | 52.848 | -29.492 | 67.206 |
| F2 | -33.435 | 17.243 | -2.495 | 155.859 | -40.052 | 149.800 |
| F1 | -37.447 | 15.621 | -1.802 | -143.674 | -2.024 | -172.446 |
| 24 | -37.424 | 14.856 | 4.393 | -163.306 | -51.935 | 132.689 |
| 6 | -37.975 | 14.979 | 4.807 | -163.306 | -51.935 | 132.689 |

In der nachfolgenden Tabelle 2 ist der optisch benutzte Bereich der jeweiligen Fläche F1 - F3 bzw. des jeweiligen Bereiches A1 - A6 angegeben. Dabei bezeichnet xh die Breite des Aperturbereichs im flächeneigenen Koordinatensystem in der x-Richtung in Millimeter. yh bezeichnet die Breite des Aperturbereichs im flächeneigenen Koordinatensystem in der y-Richtung in Millimeter. xc gibt die x-Dezentrierung des Aperturbereichs im flächeneigenen Koordinatensystem in Millimeter und yc gibt die y-Dezentrierung des Aperturbereichs im flächeneigenen Koordinatensystem in Millimeter an. Mit rot wird die Drehung des Aperturbereichs im flächeneigenen Koordinatensystem in Grad (grd = °) angegeben.

Tabelle 2

| Fäche | xh [mm] | yh [mm] | xc [mm] | yc [mm] | rot [grd] |
|---|---|---|---|---|---|
| 23 | 6.0 | 9.0 | 0.0 | 0.0 | 0.0 |
| A6 | 7.6 | 12.5 | 0.0 | 0.0 | 0.0 |
| A5 | 7.5 | 15.0 | 0.1 | -10.14 | 0.0 |
| A4 | 10.5 | 14.2 | -5.9 | 0.4 | 0.0 |
| A3 | 13.5 | 16.1 | -12.4 | 1.1 | 0.0 |
| A2 | 17.0 | 10.0 | 5.9 | 1.8 | 68.0 |
| A1 | 19.5 | 17.5 | -27.1 | 2.3 | 0.0 |
| F3 | 23.0 | 8.4 | -4.9 | 1.2 | 60.0 |
| F2 | 11.0 | 6.6 | 0.8 | -5.2 | 50.0 |
| F1 | 7.8 | 5.0 | -2.4 | -2.5 | 50.0 |

Wie bereits ausgeführt, sind die Flächen F1, F2, F3 sowie A2 als Freiformflächen ausgebildet, die der nachfolgenden Formel für z genügen:

$$z = \frac{cr^2}{1 + \sqrt{1 - (1+k)c^2 r^2}} + \sum_{j=0}^{66} C_j x^m y^n$$

mit $\qquad j = \frac{(m+n)^2 + m + 3n}{2} + 1$

Die konische Konstante c für die Freiformfläche F1 beträgt -2,08018. Für die anderen Freiformflächen ist die konische Konstante c gleich Null. Die Krümmung r der Freiformfläche F1 beträgt -0,11326. Die Krümmung r der anderen Freiformflächen ist gleich Null.

Die Koeffizienten $C_j$ der vier Freiformflächen F1, F2, F3 und A2 sind in der nachfolgenden Tabelle 3 angegeben.

Tabelle 3

| m | n | j | A2 | F3 | F2 | F1 |
|---|---|---|---|---|---|---|
| 0 | 1 | 3 | -8.211282e-001 | 3.580199e-001 | 1.098298e-001 | -3.148116e-001 |
| 0 | 2 | 6 | 3.184110e-004 | 6.844976e-003 | 1.511169e-002 | -2.542607e-002 |
| 0 | 3 | 10 | 1.123522e-004 | 1.517722e-004 | 6.759819e-004 | -2.896881e-003 |
| 0 | 4 | 15 | 4.880828e-006 | 8.735377e-006 | -1.790506e-005 | -1.967321e-004 |
| 0 | 5 | 21 | -3.854380e-007 | -1.898660e-007 | -1.942538e-006 | -2.920308e-005 |
| 1 | 0 | 2 | 1.101270e+000 | -4.851655e-001 | -1.595182e-001 | 2.092130e-002 |
| 1 | 1 | 5 | 3.381670e-003 | 9.733251e-004 | -4.032251e-003 | -5.745432e-002 |
| 1 | 2 | 9 | -2.915113e-004 | -4.578358e-005 | 1.395284e-003 | -1.854767e-002 |
| 1 | 3 | 14 | 6.203969e-006 | 3.584199e-006 | 3.218334e-004 | -4.710920e-003 |
| 1 | 4 | 20 | 2.507561e-007 | 1.270714e-006 | 1.552988e-005 | -5.415544e-005 |
| 2 | 0 | 4 | 4.938080e-003 | 2.707058e-003 | -5.192413e-003 | -1.489861e-001 |
| 2 | 1 | 8 | 3.915322e-004 | 3.371028e-005 | -2.088530e-003 | -2.404343e-002 |
| 2 | 2 | 13 | 4.393941e-005 | -9.041610e-006 | -2.066364e-004 | -1.370033e-003 |
| 2 | 3 | 19 | -1.047160e-007 | 1.814456e-008 | 2.111390e-005 | -1.409758e-003 |
| 2 | 4 | 26 | 1.622561e-008 | -4.696602e-008 | 2.367029e-006 | -3.946243e-005 |
| 3 | 0 | 7 | -6.530776e-004 | 2.186814e-004 | 2.549032e-004 | -2.239776e-002 |
| 3 | 1 | 12 | -5.184317e-005 | 9.886133e-006 | -1.642539e-005 | -6.174311e-003 |
| 3 | 2 | 18 | -5.417373e-006 | -1.006245e-007 | -7.183325e-005 | -7.051493e-005 |
| 3 | 3 | 25 | -7.520054e-008 | 1.444214e-007 | -8.004834e-006 | -7.566038e-005 |
| 4 | 0 | 11 | 1.718885e-005 | 3.877648e-007 | 7.493492e-005 | -4.229653e-003 |
| 4 | 1 | 17 | 6.068608e-006 | -2.940163e-007 | 6.131918e-005 | -7.906821e-005 |
| 4 | 2 | 24 | 2.660155e-007 | -9.820448e-008 | 8.119169e-006 | -9.450391e-005 |
| 5 | 0 | 16 | -1.246140e-006 | 4.467840e-007 | -2.412639e-005 | -8.493614e-004 |
| 5 | 1 | 23 | -2.634752e-007 | 5.179216e-009 | -5.762591e-006 | 1.479112e-004 |
| 6 | 0 | 22 | 6.636300e-008 | 1.937343e-008 | 1.672239e-006 | -9.434803e-005 |

Die Facetten 14 bzw. Flächenstücke 14 der Fresnel-Fläche 13 können durch die nachfolgende Formel für z dargestellt werden, wobei die floor-Funktion als Resultat die größte ganze Zahl liefert, die kleiner oder gleich dem Argument der floor-Funktion ist. z' kann gemäß der angegebenen Formel bestimmt werden, wobei die entsprechenden Koeffizienten $C_j$ in der nachfolgenden Tabelle 4 angegeben sind. h entspricht der tatsächlichen maximalen Tiefe der Facetten 14 in der Vorderseite 12, wobei diese in dem hier beschriebenen Ausführungsbeispiel 0,45 mm beträgt.

$$z' = \sum_{j=0}^{66} C_j x^m y^n$$

mit

$$j = \frac{(m+n)^2 + m + 3n}{2} + 1$$

$$z = floor(z', h)$$

Tabelle 4

| m | n | j | $C_j$ |
|---|---|---|---|
| 0 | 1 | 2 | 1.373398e-001 |
| 0 | 2 | 5 | -6.650772e-004 |
| 0 | 3 | 9 | 2.807541e-005 |
| 0 | 4 | 14 | -1.639263e-006 |
| 0 | 5 | 20 | -6.419537e-008 |
| 1 | 0 | 1 | -5.500267e-001 |
| 1 | 1 | 4 | 2.428782e-004 |
| 1 | 2 | 8 | 1.867594e-005 |
| 1 | 3 | 13 | -5.553906e-006 |
| 1 | 4 | 19 | -4.810459e-007 |
| 1 | 5 | 26 | -1.151520e-008 |
| 2 | 0 | 3 | -1.385537e-003 |
| 2 | 1 | 7 | -8.321437e-005 |
| 2 | 2 | 12 | -4.385827e-006 |
| 2 | 3 | 18 | 8.439495e-008 |
| 2 | 4 | 25 | 1.076058e-008 |
| 3 | 0 | 6 | 1.227509e-005 |
| 3 | 1 | 11 | -6.783826e-006 |
| 3 | 2 | 17 | -1.331306e-006 |
| 3 | 3 | 24 | -5.671084e-008 |
| 4 | 0 | 10 | 2.942916e-007 |
| 4 | 1 | 16 | -2.239356e-007 |
| 4 | 2 | 23 | -3.048329e-008 |
| 5 | 0 | 15 | 5.583618e-007 |
| 5 | 1 | 22 | 1.286646e-008 |

Das in Verbindung mit Figur 11 beschriebene Optikteil 28 ist aus Polycarbonat hergestellt.

Bei der beschriebenen Ausführungsform gemäß Figuren 11 und 12 wird die Vorderseite 12 in ihrer sphärischen Form belassen. Um die gewünschte Korrektur für die optische Abbildung des mittels des Bildgebers 6 erzeugte Bild zu erreichen, die notwendig ist, da aufgrund der Führung im dünnen Brillenglas 3 Abbildungsfehler erzeugt werden, sind im Optikelement 8 zumindest zwei nicht sphärische Flächen (hier die drei Freiformflächen F1, F2 und F3) vorgesehen, die so ausgelegt sind, dass die gewünschte möglichst fehlerfreie Abbildung erreicht werden kann. Zusätzlich ist hier noch im Bereich A2 im Randbereich 30 eine asphärische Fläche vorgesehen, um einen weiteren Freiheitsgrad bei der Korrektur von Abbildungsfehlern zu haben.

Ferner kann die Austrittspupille 22 in der x-Richtung eine große Ausdehnung aufweisen. Somit wirkt sich ein Auf- und Abrutschen der Anzeigevorrichtung auf der Nase nicht störend aus. Der Benutzer sieht stets noch das komplette abgebildete Bild. Des Weiteren kann der notwendige Bauraum für das Optikelement 8 aufgrund des Vorsehens der asphärischen Flächen sehr gering gehalten werden.

Bei den beschriebenen Ausführungsformen der erfindungsgemäßen Anzeigevorrichtung 1 erfolgt die Einspiegelung des virtuellen Bildes in das Gesichtsfeld des Benutzers über das rechte Brillenglas 3. Natürlich ist auch eine Einspiegelung über das linke Brillenglas 4 möglich. In diesem Fall muss lediglich das Optikelement 8 und das Bildererzeugungsmodul 5 im linken Brillenbügel 19 angeordnet werden. Des Weiteren kann die Anzeigevorrichtung 1 so ausgebildet sein, dass Informationen bzw. virtuelle Bilder über beide Brillengläser 3, 4 eingespiegelt werden. Dabei kann die Einspiegelung so erfolgen, dass ein dreidimensionaler Bildeindruck entsteht. Dies ist jedoch nicht zwingend notwendig. Die Brillengläser 3, 4 können eine Brechkraft von Null oder eine von Null verschiedene Brechkraft (insbe-

**EP 3 072 005 B1**

sondere zur Korrektur von Fehlsichtigkeiten) aufweisen. Die Haltevorrichtung 2 muss nicht als brillenartige Haltevorrichtung ausgebildet sein. Es ist auch jede andere Art der Haltevorrichtung möglich, mit der ein Aufsetzen oder Tragen der Anzeigevorrichtung auf dem Kopf des Benutzers erfolgen kann.

**Patentansprüche**

1. Abbildungsoptik für eine auf den Kopf eines Benutzers aufsetzbare und ein Bild erzeugende Anzeigevorrichtung, mit

   einem Optikelement (8), das eine Eintrittsfläche (F1) aufweist, und einem Brillenglas (3, 4), das einen Auskoppelabschnitt (16) aufweist,
   wobei die Abbildungsoptik (7) dazu geeignet ist, das über die Eintrittsfläche (F1) dem Optikelement (8) zugeführte erzeugte Bild im Optikelement (8) zu führen, von diesem in das Brillenglas (3, 4) einzukoppeln, in dem es bis zum Auskoppelabschnitt (16) geführt und über den Auskoppelabschnitt (16) zur Erzeugung eines virtuellen Bildes ausgekoppelt wird,
   wobei das Brillenglases (3, 4) eine Rückseite (10) sowie eine Vorderseite (12) aufweist,
   wobei das Optikelement (8) neben der Eintrittsfläche (F1) mindestens eine reflektierende äußere Grenzfläche (F2), an der das erzeugte Bild zur Führung im Optikelement (8) reflektiert wird, aufweist,
   wobei das Optikelement (8) und das Brillenglas (3, 4) zusammen als einstückiges Optikteil ausgebildet sind,
   wobei die mindestens eine reflektierende äußere Grenzfläche (F2) und die Eintrittsfläche (F1) andere Flächen sind als die Rückseite (10) und die Vorderseite (12) des Brillenglases (3, 4),
   und wobei die Rückseite (10) als plane oder gekrümmte Rückseite (10) und die Vorderseite (12) als plane oder gekrümmte Vorderseite (12) ausgebildet sind,
   **dadurch gekennzeichnet, dass**
   die Eintrittsfläche (F1) gekrümmt ausgebildet sowie transmissiv zur Einkopplung des erzeugten Bildes in das Optikelement (8) und reflektiv zur Reflexion des erzeugten Bildes im Optikelement (8) ist.

2. Abbildungsoptik nach Anspruch 1, wobei die mindestens eine äußere Grenzfläche (F2) gekrümmt ausgebildet ist, so dass das Optikelement (8) eine abbildende Eigenschaft aufweist.

3. Abbildungsoptik nach Anspruch 1 oder 2, wobei das Brillenglas eine von Null verschiedene Brechkraft zur Korrektur einer Fehlsichtigkeit aufweist.

4. Abbildungsoptik nach einem der obigen Ansprüche, wobei die Rückseite (10) des Brillenglases (3, 4) und/oder die Vorderseite (12) des Brillenglases (3, 4) gekrümmt ausgebildet sind/ist.

5. Abbildungsoptik nach einem der obigen Ansprüche, wobei das Optikelement (8) Grenzflächen aufweist, die nicht zur Führung und/oder Ein- oder Auskopplung des erzeugten Bildes dienen, wobei die Grenzflächen geschwärzt und/oder absorbierend für Licht sind.

6. Abbildungsoptik nach einem der obigen Ansprüche, wobei das Brillenglas (3, 4) einen vom Auskoppelabschnitt (16) beabstandeten Einkoppelabschnitt (15) aufweist, wobei das erzeugte Bild vom Optikelement (8) über den Einkoppelabschnitt (15) in das Brillenglas (3, 4) eingekoppelt wird und im Brillenglas (3, 4) durch Reflexion bis zum Auskoppelabschnitt (16) geführt wird.

7. Abbildungsoptik nach Anspruch 6, wobei das Brillenglas (3, 4) in einem Randbereich (30) den Einkoppelabschnitt (15) aufweist, wobei der Randbereich eine größere Dicke aufweist als der Bereich des Brillenglases (3, 4), in dem der Auskoppelabschnitt (16) liegt.

8. Abbildungsoptik nach Anspruch 6 oder 7, wobei die Vorderseite (12) und die Rückseite (10) des Brillenglases (3, 4) jeweils einen vorbestimmten Krümmungsverlauf aufweisen, wobei der Krümmungsverlauf der Vorder- und /oder Rückseite (12, 10) des Brillenglases (3, 4) vom entsprechenden vorbestimmten Krümmungsverlauf der Vorder- und/oder Rückseite (12, 10) im Bereich des Einkoppelabschnittes (15) so abweichen/abweicht, dass eine größere Dicke des Brillenglases (3, 4) im Bereich des Einkoppelabschnittes (15) im Vergleich zur Dicke im Bereich des Einkoppelabschnittes (15) vorliegt, die sich durch den vorbestimmten Krümmungsverlauf ergeben würde.

9. Abbildungsoptik nach Anspruch 6, 7 oder 8, wobei die Vorderseite (12) und die Rückseite (10) des Brillenglases (3, 4) jeweils eine sphärische Krümmung aufweisen, wobei die Rückseite (10) im Bereich des Einkoppelabschnittes (15)

12

einen von der sphärischen Krümmung abweichenden Krümmungsverlauf aufweist.

10. Abbildungsoptik nach einem der obigen Ansprüche, wobei die eine reflektierende Fläche (F2) des Optikelementes (8) als asphärische Fläche ausgebildet ist.

11. Abbildungsoptik nach Anspruch 10, wobei die asphärische Fläche keine Rotationssymmetrie aufweist.

12. Abbildungsoptik nach einem der obigen Ansprüche, wobei
die gekrümmte Eintrittsfläche (F1) als asphärische Fläche oder als Freiformfläche ausgebildet ist.

13. Abbildungsoptik nach einem der obigen Ansprüche, wobei
das Optikteil, in einer Ansicht von oben gesehen, eine L-Form aufweist.

14. Anzeigevorrichtung mit

einer auf den Kopf eines Benutzers aufsetzbaren Haltevorrichtung (2),
einem an der Haltevorrichtung befestigten Bilderzeugungsmodul (5), das ein Bild erzeugt,
und einer an der Haltevorrichtung (2) befestigten Abbildungsoptik (8) nach einem der obigen Ansprüche,
die das erzeugte Bild im auf den Kopf aufgesetzten Zustand der Haltevorrichtung (2) so abbildet, dass es der Benutzer als virtuelles Bild wahrnehmen kann.

15. Anzeigevorrichtung nach Anspruch 14, wobei die Haltevorrichtung (2) brillenartig ausgebildet und einen ersten und zweiten Brillenbügel (17, 19) aufweist, wobei das Optikelement (8) zumindest teilweise in einem der beiden Brillenbügel (17, 19) angeordnet ist.


**Claims**

1. Imaging optical system for a display device that can be fitted on the head of a user and generates an image, with

an optical element (8), which comprises an entry surface (F1), and a spectacle lens (3, 4), which comprises a coupling-out section (16),
the imaging optical system (7) is suitable for guiding the generated image fed to the optical element (8) via the entry surface (F1) in the optical element (8), for coupling it from the latter into the spectacle lens (3, 4), in which it is guided to the coupling-out section (16) and coupled out via the coupling-out section (16) to generate a virtual image,
wherein the spectacle lens (3, 4) comprises a rear side (10) and a front side (12),
wherein the optical element (8) comprises, in addition to the entry surface (F1), at least one reflecting surface (F2), on which the generated image is reflected for guiding in the optical element (8),
wherein the optical element (8) and the spectacle lens (3, 4) are formed together as a one-piece optical part,
wherein the at least one reflecting surface (F2) and the entry surface (F1) are other surfaces than the rear side (10) and the front side (12) of the spectacle lens (3, 4),
and wherein the rear side (10) is formed as plane or curved rear side (10) and the front side (12) is formed as plane or curved front side (12),
**characterized in that**.
that the entry surface (1) is formed curved and is transmissive for coupling the generated image into the optical element (8) and reflective for reflecting the generated image in the optical element (8).

2. Imaging optical system according to claim 1, **characterized in that** the at least one reflecting surface (F2) is formed curved, with the result that the optical element (8) has an imaging property.

3. Imaging optical system according to claim 1 or 2, **characterized in that** the spectacle lens (3, 4) has a refractive power different from zero to correct defective vision.

4. Imaging optical system according to one of the above claims, **characterized in that** the rear side (10) and/or the the front side (12) are formed curved.

5. Imaging optical system according to one of the above claims, **characterized in that** the optical element (8) comprises boundary surfaces which are not used for guiding and/or coupling in or out the generated image, wherein the boundary surfaces are blackened and/or light-absorbing.

6. Imaging optical system according to one of the above claims, **characterized in that** the spectacle lens (3, 4) comprises a coupling-in section (15) spaced apart from the coupling-out section (16), wherein the generated image is coupled into the spectacle lens (3, 4) from the optical element (8) via the coupling-in section (15) and is guided in the spectacle lens (3, 4) by reflection to the coupling-out section (16).

7. Imaging optical system according to claim 6, **characterized in that** the spectacle lens (3, 4) comprises, in an edge area (30), the coupling-in section (15), wherein the edge area has a greater thickness than the area of the spectacle lens (3, 4) in which the coupling-out section (16) lies.

8. Imaging optical system according to claim 6 or 7, **characterized in that** the front side (12) and the rear side (10) of the spectacle lens (3, 4) in each case have a predetermined curvature profile, wherein the curvature profile of the front and/or rear side (12, 10) of the spectacle lens (3, 4) deviate/deviates from the corresponding predetermined curvature profile of the front and/or rear side (12, 10) in the area of the coupling-in section (15) in such a way that a greater thickness of the spectacle lens (3, 4) is present in the area of the coupling-in section (15) compared with the thickness in the area of the coupling-in section (15) that would result through the predetermined curvature profile.

9. Imaging optical system according to claim 6, 7 or 8, **characterized in that** the front side (12) and the rear side (10) of the spectacle lens (3, 4) in each case have a spherical curvature, wherein the rear side (10) has a curvature profile in the area of the coupling-in section (15) that deviates from the spherical curvature.

10. Imaging optical system according to one of the above claims, **characterized in that** one of the reflecting surfaces (F2) of the optical element (8) is formed as an aspherical surface.

11. Imaging optical system according to claim 10, **characterized in that** the aspherical surface has no rotational symmetry.

12. Imaging optical system according to one of the above claims, **characterized in that** the curved entry surface (F1) is formed as an aspherical surface or as a free-form surface.

13. Imaging optical system according to one of the above claims, wherein, seen in a view from above, the optical part has an L-shape.

14. Display device with

    a holder (2) that can be fitted on the head of a user,
    an image-generating module (5) attached to the holder, which generates an image,
    and an imaging optical system (8) secured to the holder (2) according to one of the above claims, which images the generated image when the holder (2) is fitted on the head in such a way that the user can perceive it as a virtual image.

15. Display device according to claim 14, **characterized in that** the holder (2) is formed like a pair of spectacles and comprises a first and second temple stem (17, 19), wherein the optical element (8) is arranged at least partially in one of the two temple stems (17, 19).

**Revendications**

1. Optique d'imagerie pour un dispositif d'affichage pouvant être placé sur la tête d'un utilisateur et générant une image, comprenant

    un élément optique (8), qui présente une surface d'entrée (F1), et un verre de lunettes (3, 4), qui présente une portion de couplage de sortie (16),
    l'optique d'imagerie (7) étant adaptée pour guider dans l'élément optique (8) l'image générée acheminée à l'élément optique (8) par le biais de la surface d'entrée (F1), injecter celle-ci dans le verre de lunettes (3, 4), dans lequel elle est guidée jusqu'à la portion de couplage de sortie (16) et émise en sortie par le biais de la portion de couplage de sortie (16) afin de générer une image virtuelle,

le verre de lunettes (3, 4) présentant un côté arrière (10) ainsi qu'un côté avant (12),

l'élément optique (8) présentant, outre la surface d'entrée (F1), au moins une surface limite extérieure (F2) réfléchissante sur laquelle l'image générée est réfléchie pour être guidée dans l'élément optique (8),

l'élément optique (8) et le verre de lunettes (3, 4) étant réalisés ensemble sous la forme d'une pièce optique d'un seul tenant,

l'au moins une surface limite extérieure (F2) réfléchissante et la surface d'entrée (F1) étant des surfaces autres que le côté arrière (10) et le côté avant (12) du verre de lunettes (3, 4), et le côté arrière (10) étant réalisé sous la forme d'un côté arrière (10) plan ou incurvé et le côté avant (12) sous la forme d'un côté avant (12) plan ou incurvé, **caractérisée en ce que**

la surface d'entrée (F1) est de configuration incurvée ainsi que transmissive pour l'injection de l'image générée dans l'élément optique (8) et réfléchissante pour la réflexion de l'image générée dans l'élément optique (8).

2. Optique d'imagerie selon la revendication 1, l'au moins une surface limite extérieure (F2) étant de configuration incurvée, de sorte que l'élément optique (8) présente une propriété d'imagerie.

3. Optique d'imagerie selon la revendication 1 ou 2, le verre de lunettes présentant une puissance de réfraction non nulle pour corriger un défaut de vision.

4. Optique d'imagerie selon l'une des revendications ci-dessus, le côté arrière (10) du verre de lunettes (3, 4) et/ou le côté avant (12) du verre de lunettes (3, 4) étant de configuration incurvée.

5. Optique d'imagerie selon l'une des revendications ci-dessus, l'élément optique (8) présentant des surfaces limites qui ne servent pas au guidage et/ou à l'injection ou au couplage de sortie de l'image générée, les surfaces limites étant noircies et/ou absorbantes pour la lumière.

6. Optique d'imagerie selon l'une des revendications ci-dessus, le verre de lunettes (3, 4) présentant une portion d'injection (15) espacée de la portion de couplage de sortie (16), l'image générée étant injectée par l'élément optique (8) dans le verre de lunettes (3, 4) par le biais de la portion d'injection (15) et étant guidée dans le verre de lunettes (3, 4) par réflexion jusqu'à la portion de couplage de sortie (16).

7. Optique d'imagerie selon la revendication 6, le verre de lunettes (3, 4) présentant la portion d'injection (15) dans une zone de bord (30), la zone de bord présentant une épaisseur supérieure à la zone du verre de lunettes (3, 4) dans laquelle se trouve la portion de couplage de sortie (16).

8. Optique d'imagerie selon la revendication 6 ou 7, le côté avant (12) et le côté arrière (10) du verre de lunettes (3, 4) présentant chacun un tracé de courbure prédéterminé, le tracé de courbure du côté avant et/ou arrière (12, 10) du verre de lunettes (3, 4) s'écartant du tracé de courbure prédéterminé correspondant du côté avant et/ou arrière (12, 10) dans la zone de la portion d'injection (15), de telle sorte qu'il existe une épaisseur plus importante du verre de lunettes (3, 4) dans la zone de la portion d'injection (15) en comparaison de l'épaisseur dans la zone de la portion d'injection (15) qui résulterait du tracé de courbure prédéterminé.

9. Optique d'imagerie selon la revendication 6, 7 ou 8, le côté avant (12) et le côté arrière (10) du verre de lunettes (3, 4) présentant respectivement une courbure sphérique, le côté arrière (10) présentant dans la zone de la portion d'injection (15) un tracé de courbure différent de la courbure sphérique.

10. Optique d'imagerie selon l'une des revendications ci-dessus, ladite surface réfléchissante (F2) de l'élément optique (8) étant réalisée sous la forme d'une surface asphérique.

11. Optique d'imagerie selon la revendication 10, la surface asphérique ne présentant pas de symétrie de rotation.

12. Optique d'imagerie selon l'une des revendications ci-dessus, la surface d'entrée incurvé (F1) étant réalisée sous la forme d'une surface asphérique ou d'une surface de forme libre.

13. Optique d'imagerie selon l'une des revendications ci-dessus, la pièce optique, vue de dessus, présentant une forme en L.

**14.** Dispositif d'affichage comprenant

un dispositif de maintien pouvant être placé sur la tête d'un utilisateur (2),
un module de génération d'image (5) fixé sur le dispositif de maintien, qui génère une image,
et une optique d'imagerie (8) selon l'une des revendications ci-dessus, fixée au dispositif de maintien (2),
qui reproduit l'image générée lorsque le dispositif de maintien (2) est placé sur la tête, de telle sorte que
l'utilisateur puisse la percevoir comme une image virtuelle.

**15.** Dispositif d'affichage selon la revendication 14, le dispositif de maintien (2) étant réalisé à la manière de lunettes et possédant une première et une deuxième branches de lunettes (17, 19), l'élément optique (8) étant disposé au moins partiellement dans l'une des deux branches de lunettes (17, 19).

Fig. 1

Fig. 2

Fig. 3

Fig. 4

Fig. 5

Fig. 6

Fig. 7

Fig. 8

Fig. 9

Fig. 10

Fig. 11

Fig. 12

**EP 3 072 005 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009010537 A1
- US 20080043347 A1
- WO 0195027 A2
- WO 2013173732 A1
- WO 2007062098 A2